# EUROPÄISCHE PATENTSCHRIFT

(11) **EP 1 130 276 B1**
(45) Veröffentlichungstag und Bekanntmachung des Hinweises auf die Patenterteilung: **27.10.2004**
(21) Anmeldenummer: 00104766.1
(22) Anmeldetag: 04.03.2000
(51) Int. Cl.: F16C 11/06

(54) **Schwenkbares Gleitlager**
Pivotable slide bearing
Palier lisse pivotable

(43) Veröffentlichungstag der Anmeldung: 05.09.2001
(73) Patentinhaber: BÜMACH ENGINEERING INTERNATIONAL B.V., 7811 HH Emmen (NL)
(72) Erfinder: Büter, Josef, 49733 Haren/Altenberge (DE)
(74) Vertreter: Haussingen, Peter

(56) Entgegenhaltungen:
- EP-A- 0 913 595
- FR-A- 845 171
- FR-A- 1 471 780
- US-A- 3 172 690
- US-A- 3 989 321

## Beschreibung

Die Erfindung bezeichnet ein schwenkbares Gleitlager, das in weiten Bereichen der mobilen Antriebstechnik angewendet werden kann und insbesondere auf dem Gebiet der Hydraulik und Pneumatik als Gelenkkopf mit kardanische Lagerung einsetzbar ist.

Aus dem Stand der Technik sind selbsteinstellende Gleitlager bekannt, die als kardanische Gelenklager ausgeführt sein können und aus einem monolithischen oder auch segmentierten Innenring sowie einen radial geschlossenen Außenring bestehen. Der Außenring eines Gelenklagers weist gewöhnlich eine passend zur teilkugeligen Oberfläche des Innenrings passende, sphärisch gekrümmte innere Tragfläche auf, die als Gleitfläche dient und deren Freiheitsgrad die Bewegung in drei Ebenen ermöglicht.
Neben den Gelenklagern, die eine formschlüssige Kopplung der Achse oder Welle über die Oberfläche der zylindrischen Büchse mit dem Innenring aufweisen, sind auch Ausführungen bekannt, bei denen die Bohrung des Innenrings als zusätzliches Loslager dienen kann und zusätzliche Axialbewegungen der Steckachse ermöglichen.
Der Außenring kann in besonderen Fällen auch axial oder radial geteilt ausgeführt und über lösbare Verbindungselemente miteinander verbunden sein.
Ein derartiges Gelenklager wird im Gebrauchsmuster DE 90 16 971 beschrieben. Das insbesondere für Stangenköpfe ausgebildete Gelenklager besteht aus einem quer zur Achsrichtung geteilten Außenring mit jeweils einem, an dessen Außenseite umlaufenden, radial nach innen gerichteten Steg geringer axialer Breite, dessen Hälften durch axiale Stehbolzen miteinander verbunden sind und einem Innenring mit sphärischer Mantelfläche.

Im montierten Zustand des Gelenklagers liegen die Stege unter Vorspannung auf der Mantelfläche des Innenrings an. Die Gleitfläche des Innenrings wird vom Außenring nicht vollflächig getragen. Mit einem derartigen Gelenklager lassen sich deshalb im Verhältnis zur Lagergröße nur geringere Kräfte übertragen. Zum Austausch des Innenrings ist der Außenring zumindest teilweise zu demontieren.

In der Offenlegungsschrift DE 30 39 023 wird ein aus einem Rohrstück hergestellter Innenring eines Gelenklagers beschrieben, dessen teilkugelige Lauffläche im mittleren Bereich, am Umfang, eine nach innen gerichtete Sicke aufweist. Der Innendurchmesser des Rings ist gleich dem Innendurchmesser im Bereich der Sicke. Die Sicke dient im Bereich der Lauffläche zur - Versorgung mit Schmiermittel. Nachteilig an dieser Lösung ist insbesondere die Aufnahme der Welle oder Achse an nur drei Mantellinien des Innenrings, die nicht in allen Fällen den auftretenden Belastungen gewachsen ist.

Eine spezielle Möglichkeit zur Ausbildung der sphärischen Tragfläche im Außenring einer Kugelgelenklagereinheit beschreibt die Druckschrift DE 42 22 803. Der Außenring dieser schmiermittelfreien Kugelgelenklagereinheit ist mit einer, an ihrer Innenseite gute Schmiereigenschaften aufweisenden, mehrschichtigen Gleitbüchse versehen, die mit diesem fest verbunden ist. Bei Verschleiß ist das Auswechseln der Gleitbüchse nicht möglich, der Innenring ist auch nicht auswechselbar.

Ungeteilten kardanischen Gleitlagern ist auch gemeinsam, daß bei Verschleiß des Innenrings die gesamte Lagereinheit gewechselt werden muß. Das Wechseln des Innenrings bei geteiltem Außenring ist möglich, jedoch mit hohem Montageaufwand verbunden. Es treten erhebliche Kosten für Ersatzteile und Arbeitsaufwand als auch längere Ausfallzeiten der betroffenen Ausrüstungen auf.

Aus der Offenlegungsschrift DE 26 48 337 ist ein selbsteinstellendes sphärisches Element für Gleitlager bekannt, bei dem es durch einen Arretierzapfen, der in eine Nut im sphärischen Innenring eingreift, ermöglicht wird, daß sich der Innenring gegenüber dem Außenring als Führungsteil selbständig einstellt, jedoch nicht um seine Achse dreht. Hier ist ausschließlich die Bohrung des Innenrings als Lager vorgesehen. Der Innenring ist nicht segmentiert und nicht einfach auswechselbar.

Kardanische Gelenklager mit einem radial geschlossenen Außenring sowie einem segmentierten Innenring, dessen Segmente sich durch Kippen und Schwenken wechseln lassen, sind ebenfalls aus dem Stand der Technik bekannt.

In der Druckschriften US 3,888,554 wird ein selbstschmierendes sphärisches Gleitlager beschrieben, dessen Innenring aus einer Büchse mit zwei umlaufenden Lippen zur axialen Fixierung der auf dieser angeordneten Kugelkalottensegmente besteht, wobei selbstschmierende Kugelkalottensegmente alternierend zu anderen angeordnet sind. Die Kugelkalottensegmente sind durch Kippen und Schwenken des Innenrings einzeln auswechselbar.

Die Druckschrift US 3,893,736 offenbart ebenfalls ein selbsteinstellendes Lager. Der Innenring besteht gleichfalls aus einer Büchse mit zwei umlaufenden Lippen zur axialen Fixierung der auf dieser angeordneten mindestens 3 sphärischen Kugelkalottensegmente.

Des Weiteren wird in der Druckschrift US 3,107,954 ein selbsteinstellendes sphärisches Lager mit geteiltem Innenring in Form von Kugelhalbschalen beschrieben, die über ihren Innendurchmesser direkt mit einer Steckachse gekoppelt sind. Der äußere Durchmesser der Kugelhalbschalen ist geringer als der innere Durchmesser des sphärischen Außenrings. Die Bohrung der Kugelhalbschalen als Innenring ist kleiner als der Durchmesser der Steckachse und zudem ballig ausgebildet, wodurch die Kugelhalbschalen elastisch gegen den Außenring verspannt, somit fixiert werden. Bei Abnutzung kann das Lager durch Beilagen auf der Steckachse zwischen einem Gabelkopf nachjustiert werden. Besonders nachteilig wirkt sich hier die Verspannung der Teile untereinander aus, die zwangsläufig zu einem hohen Verschleiß mit aufwendigen Wartungsarbeiten führen.

Ein sphärisches Lager mit federbelastetem, segmentiertem Innenring ist in der Druckschrift US 3,989,321 beschrieben. Die Büchse weist auch hier zwei umlaufende Lippen zur axialen Fixierung der Kugelkalottensegmente auf, zwischen denen alternierend in entsprechend vorgesehenen Freiräumen Blattfedern angeordnet sind, die mit einer definierten Vorspannung die Kugelkalottensegmente radial verspannen und so in die innere sphärische Fläche des Außenrings drücken, wodurch Toleranz oder Verschleiß bedingte Freiräume ausgeglichen werden. Bedingt durch die Verspannung erhöht sich hierbei auch der Verschleiß.

Bei allen genannten kardanischen Gelenklagern mit segmentiertem Innenring ist den Kugelkalottensegmenten eine von der Steckachse oder Büchse unabhängige Bewegung möglich, wodurch die rotierende, oder auch schwenkende Bewegung des Innenrings nicht zwangsläufig der Bewegung der Steckachse oder auch der Büchse folgt. Die dynamischen Tragzahlen dieser Lager sind gemindert, da die Bewegung auf dem kleineren Durchmesser der Steckachse oder auch der Büchse erfolgt, so daß die spezifischen Lagerpressungen in den so verringerten Gleitflächen höher sind. Es bildet sich zwischen den Kugelkalottensegmenten und der Büchse bzw. der Büchse und der Steckachse eine zusätzliche Gleitfläche aus, so daß ein erheblicher Verschleiß auftritt sowie die beabsichtigte Wirkung, wonach die Kugelkalottensegmente in der Innenfläche des Außenrings gleiten sollen, nicht gewährleistet ist.

Die Ausbildung eines weiteren selbsteinstellenden Gelenklagers mit segmentiertem Innenring wird ist in der Druckschrift US 4,077,681 offenbart. Der sphärische Innenring besteht aus mindestens zwei Kugelkalottensegmenten mit einem Gewinde auf ihrer inneren Oberfläche, die auf einer Außengewindebüchse mit einem Bund sowie einem Gewindering angeordnet sind. Bei dieser Lösung treten bei der Verspannung der Kugelkalottensegmente mit der Gewindeformbüchse Radialkräfte auf, die über die Gewindeflanken auf die Gleitfläche wirken, daher ist keine exakte Lagerung gegeben, weil die Kugelkalottensegmente auf den Gewindeflanken lagern. Zudem ist die Herstellung des Lagers kostenaufwendig sowie die Montage und Demontage zeitraubend und kompliziert, wobei die praktische Verwendbarkeit stark eingeschränkt ist.

In der Druckschrift EP 0 913 595 A1, die den Oberbegriff des Anspruchs 1 entspricht, wird neben einem Verfahren zur Herstellung eines Innenrings eines schwenkbaren Gleitlagers vorgeschlagen, diesen geteilt oder aus mehreren Elementen bestehend, auszuführen. Der Innenring kann unter anderem aus einer Hülse, auf der im Querschnitt C-förmige als Gleitelemente angeordnet sind, gebildet werden, wobei die Hülse Nocken zur kraft- und formschlüssigen Kopplung der Kugelkalottensegmente aufweist. Gemäß der beschriebenen Lösung sind zwischen den beiden Segmenten Lücken im Bereich der Nocken vorhanden, die zumindest die Tragfähigkeit eines so ausgeführten Lagers einschränken.

Das aus Fig.9 der FR-A-845 171 bekante schwenkbare Gleitlager weist ein Formteil auf, dass in Gegensatz zur Formbüchse des Patents am gesamten Umfag Abflachungen aufweist.

Das Wesen der Erfindung besteht in der Ausbildung des Innenrings aus einer Formbüchse mit Kopplungselementen, beispielsweise axialen Stegen, über die eine kraftübertragend formschlüssige Kopplung mit den am Umfang der Formbüchse angeordneten Kugelkalottensegmenten erfolgt.

Die Kopplung der Kugelkalottensegmente mit der Formbüchse kann auch durch Abflachungen an deren Umfang, die mit korrespondierenden Gegenflächen an den Stoßstellen der Kugelkalottensegmente zusammenwirken, erfolgen.

Des Weiteren läßt sich die Kopplung der Kugelkalottensegmente mit der Formbüchse mittels austauschbarer Paßfedern in Nuten der Formbüchse, die mit korrespondierenden Aussparungen an den Stoßstellen der Kugelkalottensegmente in Wirkverbindung stehen, realisieren.

Der Außendurchmesser der Formbüchse drückt die Kugelkalottensegmente in die Gleitebene der sphärischen Innenkontur des Außenrings, hält diese darin formschlüssig, wodurch der in drei Ebenen bewegliche Innenring fünktionstüchtig ist.

Die axiale Länge der Stege entspricht vorteilhaft der axialen Länge der Formbüchse, deren Kontur an den beiden axialen Enden vorteilhaft dem sphärischen Querschnitt angepaßt ist.

Der größte äußere Durchmesser der Formbüchse über die Stege ist vorteilhaft dem kleinsten Innendurchmesser der Kontur des Außenrings angepaßt.

In einer Ausführungsform können Kugelkalottensegmente unterschiedlicher Eigenschaften, z.B. hoher statischer Tragfähigkeit neben solchen mit begünstigenden Schmiereigenschaften, kombiniert auf der Formbüchse angeordnet sein, so daß wartungsarme schwenkbare Gleitlager hoher Tragfähigkeit ausführbar sind.

Durch geeignete Wahl der Materialpaarung der Gleitflächen des Innenrings und der Gleitfläche des Außenrings werden die Kugelkalottensegmente des Innenrings als Verschleißteile ausgebildet. Verschlissene Kugelkalottensegmente können nach Herausschwenken des Innenrings aus der radialen Ebene des Außenrings einzeln ausgetauscht werden. Hierdurch wird es- möglich, insbesondere den gesamten Reparaturaufwand zu vermindern, der sonst beim kompletten Wechsel eines schwenkbaren Gleitlagers, oder bei geteilten Lagern dessen Innenrings, erforderlich wäre. Es müssen nur die wirklich verschlissenen Elemente gewechselt werden. Die wirtschaftliche Verfügbarkeit der mit derartigen Lagern ausgestatteten Ausrüstungen wird erhöht.

Die Bohrung der Formbüchse kann mit einer sehnenförmig verlaufenden Abflachung zur formschlüssigen radialen Kopplung einer entsprechend abgeflachten Steckachse ausgeführt sein.

Vorteilhaft läßt sich die Formbüchse einzeln wechseln.

Günstigerweise läßt sich auch ein Baukastensystem aus beliebig angepaßten Formbüchsen und Kugelkalottensegmenten mit speziellen Eigenschaften zur Ausbildung schwenkbarer Gleitlager herstellen, die bei gleicher Ausbildung des Außenrings verschiedene Bohrungsdurchmesser aufweisen.
Die Büchse selbst kann als zusätzliches Gleitlager ausgebildet sein. Mit der Auswahl und Kombination von verschiedenen Kugelkalottensegmenten ist die sofortige Anpassung von schwenkbaren Gleitlagern an besondere Einsatzgebiete sowie Anforderungen möglich.
Vorteilhaft lassen sich die Stegnuten der Formbüchse auch als Depotkammern zur zusätzlichen Aufnahme von Schmiermittel zur besseren Versorgung der Gleitfläche zwischen Innen- und Außenring ausbilden.

Eine bemerkenswerte Weiterbildung besteht in der Ausbildung des Außenrings als Bestandteil eines Getriebeglieds, indem die teilkugelige Innenkontur in das Getriebeglied selbst eingearbeitet sein kann.

Die Erfindung wird in einen Ausführungsbeispiel an Hand von
Fig. 1 als Teilschnitt eines nicht beanspruchten, der Veranschaulichung der Fachgebeites dienenden schwenkbaren Gleitlagers
Fig. 2 als Halbschnitt des eines nicht beanspruchten, der Veranschaulichung der Fachgebeites dienenden schwenkbaren Gleitlagers
Fig. 3 als Halbschnitt eines Gelenkkopfs
Fig. 4 als Schnitt des Innenrings eines erfindungsgemäßen schwenkbaren Gleitlagers mit Abflachungen am Außendurchmesser der Büchse und sehnenförmiger Abflachung am Innendurchmesser der Bohrung näher erläutert.

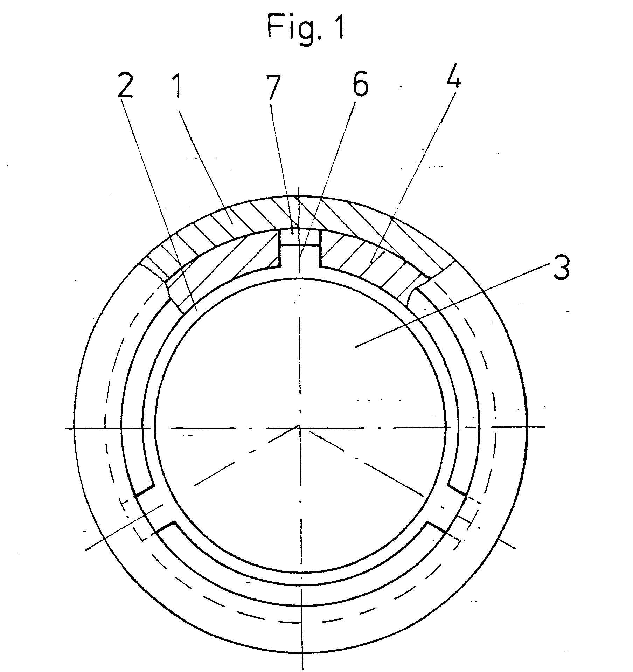

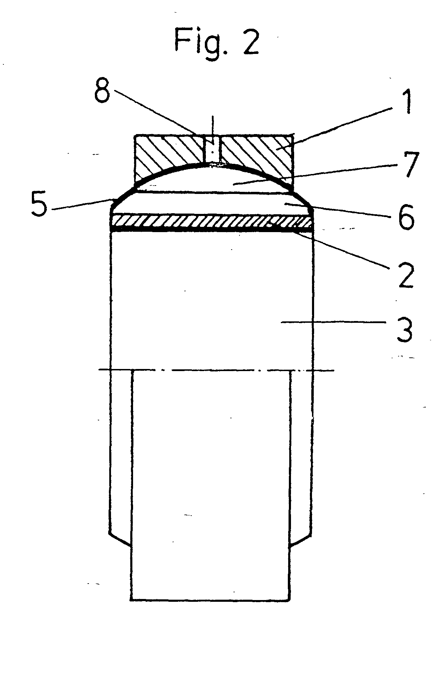

Nach Fig.1 und Fig.2 besteht ein schwenkbares Gleitlager aus einem Außenring 1 mit einem Innenring, welcher aus einer Formbüchse 2 mit prismatischer Bohrung 3, vorzugsweise zylindrisch, an deren Umfang je drei Kugelkalottensegmente 4 mit einer Gleitschicht 5 alternierend mit Stegen 6 angeordnet sind, gebildet wird. Die Kugelkalottensegmente 4 bilden die sphärische Gleitfläche des Innenrings, wobei sich alternierend zwischen den einzelnen Kugelkalottensegmenten 4 die Stege 6 mit Depotkammern 7 für Schmiermittel befinden. Die Zufuhr geeigneter Schmiermittel kann bei Erfordernis durch eine Schmiermittelbohrung 8 im Außenring 1 erfolgen. Zum Austausch der Kugelkalottensegmente 4 des Innenrings wird dieser gedreht und soweit aus der radialen Ebene des schwenkbaren Gleitlagers herausgekippt, daß eines der Kugelkalottensegmente 4 von der Formbüchse 2 abgenommen werden kann. Die anderen Kugelkalottensegmente 4 sind nach Verdrehen der Formbüchse 2 ebenso entnehmbar und können problemlos ausgetauscht werden. Die Formbüchse 2 kann optional aus dem Außenring 1 entnommen werden. Die Montage erfolgt in umgekehrter Reihenfolge.

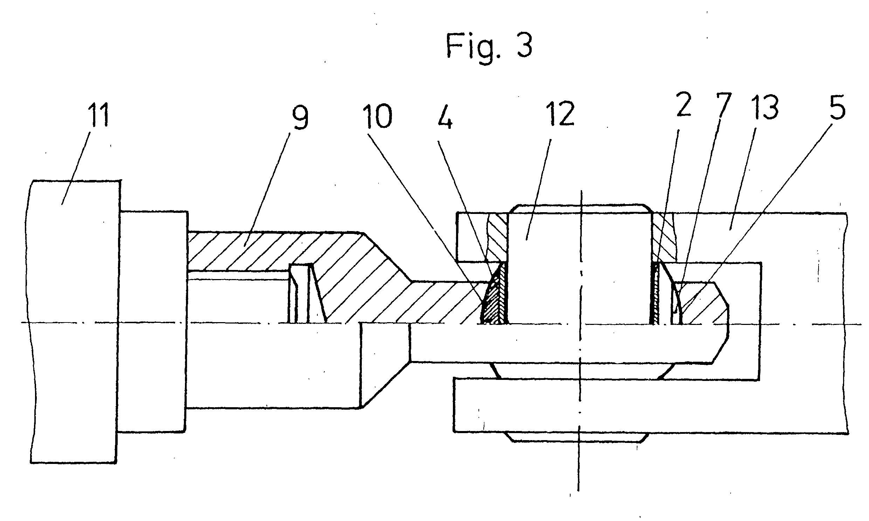

Nach Fig.3 besteht eine mögliche Variante zur Ausbildung eines schwenkbaren Gleitlagers aus einem Gelenkkopf 9 in dessen flachem Endstück eine Lagerbohrung mit sphärischer Innengleitfläche 10 eingearbeitet ist, die als Außenring 1 dient, in dem der Innenring, bestehend aus der Formbüchse 2 und den Kugelkalottensegmenten 4 dreh- und schwenkbar gelagert ist. Der Gelenkkopf 9, der mit einem Hydraulikzylinder 11 verbunden ist, überträgt dessen aufgebrachte Kräfte über den Innenring des schwenkbaren Gleitlagers auf eine, mit der Bohrung 3 der Formbüchse 2 formschlüssig verbundenen Achse 12, auf ein Getriebeglied 13.

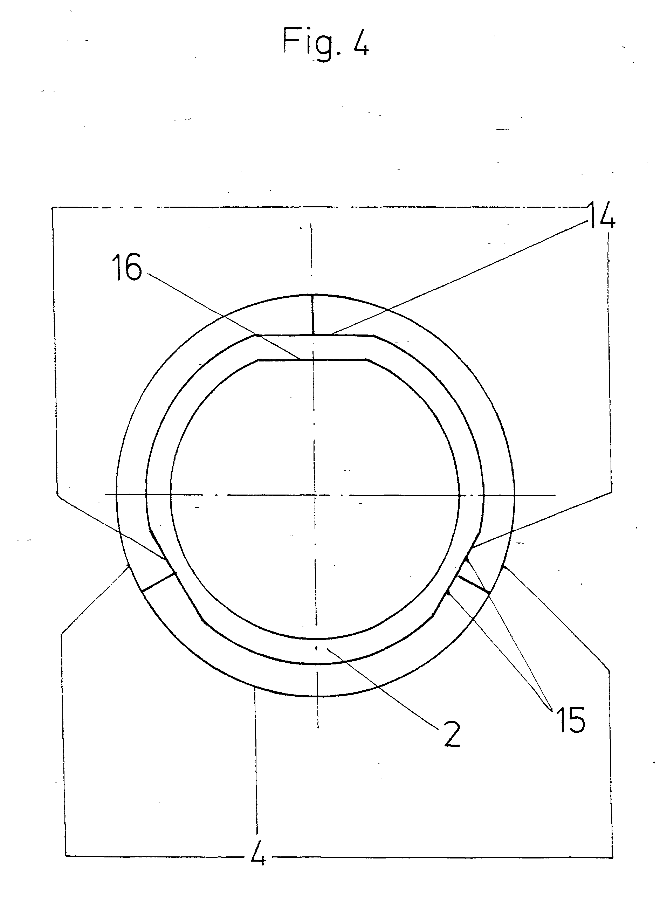

Der in Fig. 4 im Schnitt dargestellte Innenring eines erfindungsgemäßen schwenkbaren Gleitlagers zeigt nun die an den Stoßstellen der Kugelkalottensegmente 4 ausgebildeten Abflachungen 14 am Außendurchmesser der Formbüchse 2 mit den korrespondierenden Gegenflächen 15 der Kugelkalottensegmente 4. In der Bohrung 3 ist eine sehnenförmige Abflachung 16, die vorteilhaft gegenüber der äußeren Abflachung 14 angeordnet ist, ausgebildet. Die Anzahl der sehnenförmigen Abflachungen 16 kann der Anzahl der am Außendurchmesser der Formbüchse 2 vorgesehenen Abflachungen 14 entsprechen; mindestens ist jedoch eine sehnenförmige Abflachung 16 vorgesehen. Eine vorteilhafte weitere Ausführungsform weist in der Bohrung 3 jeweils den äußeren Abflachungen 14 gegenüber ausgebildete sehnenförmige Abflachungen 16 auf, eine Steckachse mit entsprechender Abflachung kann auf diese Weise radial formschlüssig mit dem Innenring verbunden werden, wobei axiale Bewegungen möglich sind. Die Formbüchse kann fertigungstechnisch als einfaches Preßteil hergestellt werden.

### Verwendete Bezugszeichen

- 1: Außenring
- 2: Formbüchse
- 3: Bohrung
- 4: Kugelkalottensegment
- 5: Gleitschicht
- 6: Steg
- 7: Depotkammer
- 8: Schmiermittelbohrung
- 9: Gelenkkopf
- 10: sphärische Innengleitfläche
- 11: Hydraulikzylinder
- 12: Achse
- 13: Getriebeglied
- 14: Abflachungen
- 15: korrespondierende Gegenstücke
- 16: sehnenförmige Abflachung

## Patentansprüche

1. Schwenkbares Gleitlager, bestehend aus einem Außenring (1) und einem Innenring, wobei der Innenring aus auf einer Formbüchse (2) mit einer Bohrung (3) angeordneten Kugelkalottensegmenten (4) besteht, deren Außenkonturen die sphärische Gleitfläche bilden, wobei der Innenring in der sphärischen Gleitfläche des Außenrings (1) schwenkbar gelagert ist und einzelne Kugelkalottensegmente (4) durch Drehung und Schwenkung des Innenrings austauschbar sind, wobei die Formbüchse (2) an ihrem Umfang, vorzugsweise an den Stoßstellen der Kugelkalottensegmente (4), Kopplungselemente aufweist, mittels derer die Kugelkalottensegmente (4) kraftübertragend formschlüssig mit der Formbüchse (2) gekoppelt sind, **dadurch gekennzeichnet,**
**dass** die Kopplungselemente am Umfang der Formbüchse (2) in Form von Abflachungen (14) angeordnet sind und mit korrespondierenden Gegenflächen (15) an den Kugelkalottensegmenten (4) zusammenwirken.

2. Schwenkbares Gleitlager nach Anspruch 1,
**dadurch gekennzeichnet,**
**dass** die Gleitfläche des Innenrings des schwenkbaren Gleitlagers aus einer Vielzahl von Kugelkalottensegmenten (4) unterschiedlicher Eigenschaften besteht.

3. Schwenkbares Gleitlager nach den Ansprüchen 1 bis 2,
**dadurch gekennzeichnet,**
**dass** die Außenkontur der Kugelkalottensegmente (4) des Innenrings als Verschleißteile ausgebildet sind.

4. Schwenkbares Gleitlager nach den Ansprüchen 1 bis 3,
**dadurch gekennzeichnet,**
**dass** die sphärische Innenkontur des Außenrings (1) Bestandteil eines Gelenkkopfes (9) ist, der als Getriebeglied (13) einer kinematischen Kette in Anwendung ist.

5. Schwenkbares Gleitlager nach den Ansprüchen 1 bis 4, **dadurch gekennzeichnet,**
**dass** die Bohrung (3) der Formbüchse (2) als zusätzliches Gleitlager ausgebildet ist.

6. Schwenkbares Gleitlager nach den Ansprüchen 1 bis 5, **dadurch gekennzeichnet,**
**dass** die Bohrung (3) der Formbüchse (2) mindestens eine sehnenförmige Abflachung (16) zur formschlüssigen radialen Kopplung einer entsprechend abgeflachten Steckachse aufweist.

## Claims

1. Pivotable sliding bearing consisting of an outer ring (1) and an inner ring, wherein the inner ring consists of universal ball joint segments (4) which are disposed on a moulded bushing (2) with a bore (3) and whose outer contours form the spherical sliding surface, wherein the inner ring is pivotably mounted in the spherical sliding surface of the outer ring (1) and individual universal ball joint segments (4) can be interchanged by rotating and pivoting the inner ring, wherein the moulded bushing (2) comprises on its periphery, preferably on the abutment points of the universal ball joint segments (4), coupling elements, by means of which the universal ball joint segments (4) are coupled to the moulded bushing (2) in a force-transmitting, positive-locking manner, **characterised in that** the coupling elements are disposed on the periphery of the moulded bushing (2) in the form of flattened portions (14) and cooperate with corresponding counter surfaces (15) on the universal ball joint segments (4).

2. Pivotable sliding bearing as claimed in claim 1, **characterised in that** the sliding surface of the inner ring of the pivotable sliding bearing consists of a plurality of universal ball joint segments (4) which have different characteristics.

3. Pivotable sliding bearing as claimed in claims 1 to 2, **characterised in that** the outer contour of the universal ball joint segments (4) of the inner ring are formed as wearing parts.

4. Pivotable sliding bearing as claimed in claims 1 to 3, **characterised in that** the spherical inner contour of the outer ring (1) is a component of an articulated head (9) which is used as a transmission link (13) of a kinematic chain.

5. Pivotable sliding bearing as claimed in claims 1 to 4, **characterised in that** the bore (3) of the moulded bushing (2) is formed as an additional sliding bearing.

6. Pivotable sliding bearing as claimed in claims 1 to 5, **characterised in that** the bore (3) of the moulded bushing (2) comprises at least one chord-like flattened portion (16) with respect to the positive-locking radial coupling of a correspondingly flattened knock-out spindle.

## Revendications

1. Palier lisse pivotable composé d'une bague externe (1) et d'une bague interne, elle-même composée de segments de calotte sphérique (4) montés sur une douille profilée (2) percée d'un alésage (3), les contours externes de ces segments formant la portée sphérique de glissement, de sorte que la bague interne peut pivoter dans cette portée sphérique et que les différents segments de calotte sphérique (4) sont échangeables par rotation et pivotement de la bague interne, la douille profilée (2) présentant sur sa périphérie, de préférence aux joints des segments (4), des éléments d'accouplement par l'intermédiaire desquels les segments de calotte (4) sont accouplés à la douille profilée (2) par combinaison de formes assurant la transmission des forces,
**caractérisé en ce que**
les éléments d'accouplement sont disposés à la périphérie de la douille profilée (2) sous la forme de méplats (14) et coopèrent avec des contre-portées (15) correspondantes des segments (4).

2. Palier lisse pivotable selon la revendication 1,
**caractérisé en ce que**
la portée de glissement de la bague interne du palier lisse pivotable est composée d'une pluralité de segments de calotte sphérique (4) présentant des propriétés différentes.

3. Palier lisse pivotable selon les revendications 1 et 2,
**caractérisé en ce que**
le contour externe des segments (4) de la bague interne est constitué en tant que parties d'usure.

4. Palier lisse pivotable selon les revendications 1 à 3,
**caractérisé en ce que**
le contour sphérique interne de la bague externe (1) est un composant d'une tête d'articulation (9) utilisé comme organe de transmission (13) d'une chaîne cinématique.

5. Palier lisse pivotable selon les revendications 1 à 4,
**caractérisé en ce que**
l'alésage (3) de la douille profilée (2) a la configuration d'un palier lisse supplémentaire.

6. Palier lisse pivotable selon les revendications 1 à 5,
**caractérisé en ce que**
l'alésage (3) de la douille profilée (2) présente au moins un méplat (16) selon une corde, pour pouvoir s'accoupler avec combinaison radiale de formes à un axe emmanché aplati de manière correspondante.
